# EUROPEAN PATENT SPECIFICATION

(11) **EP 0 475 392 B1**
(45) Date of publication and mention of the grant of the patent: **20.03.1996**
(21) Application number: 91115391.4
(22) Date of filing: 11.09.1991
(51) Int. Cl.: A01N 47/36

(54) **Herbicidal composition**
Herbizide Zusammensetzung
Composition herbicide

(30) Priority: 13.09.1990 JP 243252/90
(43) Date of publication of application: 18.03.1992
(73) Proprietor: ISHIHARA SANGYO KAISHA, Ltd., Nishi-ku Osaka-shi Osaka-fu (JP)
(72) Inventor: Sakashita, Nobuyuki, c/o Ishihara Sangyo Kaisha, Kusatsu-shi, Shiga (JP); Yoshii, Hiroshi, c/o Ishihara Sangyo Kaisha, Kusatsu-shi, Shiga (JP); Yoshida, Tsunezo, c/o Ishihara Sangyo Kaisha, Kusatsu-shi, Shiga (JP); Honzawa, Shooichi, c/o Ishihara Sangyo Kaisha, Kusatsu-shi, Shiga (JP); Kikugawa, Hiroshi, c/o Ishihara Sangyo Kaisha, Kusatsu-shi, Shiga (JP)
(74) Representative: Hansen, Bernd, Dr. Dipl.-Chem.

(56) References cited:
- EP-A- 0 184 385

## Description

### FIELD OF THE INVENTION

The present invention relates to a herbicidal composition comprising, as active ingredients, 1-(4,6-dimethoxy-pyrimidin-2-yl)-3-(3-trifluoromethyl-2-pyridylsulfonyl)urea (hereinafter referred to as "Compound A") or a salt thereof and an isopropylamine salt or trimethylsulfonium salt of N-(phosphonomethyl)glycine (hereinafter referred to as "Compound B").

### BACKGROUND OF THE INVENTION

Many kinds of herbicides have been developed and are used nowadays. Since objects for control with a herbicide include a wide variety of weeds with a long duration of emergence, there has been a demand for development of a herbicide having a wider herbicidal spectrum, a high activity and a persistent herbicidal effect.

EP-A-0 184 385 refers to herbicidal compositions comprising a herbicidally effective amount of N-[(4,6-dimethoxy-pyrimidin-2-yl)aminocarbonyl]-3-trifluoromethyl-pyridine-2-sulfonamide or a salt thereof as an active ingredient and an agriculturally acceptable adjuvant. This composition can be mixed or used together with other agricultural chemicals, fertilizers, soil or safeners.

As a result of extensive investigations with a view to developing a herbicide with characteristics as mentioned above, the inventors of the present invention have found out that the herbicidal composition of the present invention can control a wide variety of weeds emerging in crop lands as well as non-crop lands. More specifically, it has been found out that the herbicidal effect of the herbicidal composition of the present invention is unexpectedly higher than the mere addition of the herbicidal effects of individual active ingredients and, in short, is manifested as a synergistic herbicidal effect, whereby the herbicidal composition of the present invention may be applied in smaller amounts of the active ingredients with an expanded herbicidal spectrum and a persistent herbicidal effect as compared with any one of the individual active ingredients when singly applied. Thus, the present invention has been completed.

### SUMMARY OF THE INVENTION

An object of the present invention is to provide a herbicidal composition comprising, as active ingredients, Compound A or a salt thereof and Compound B.

### BRIEF DESCRIPTION OF THE DRAWING

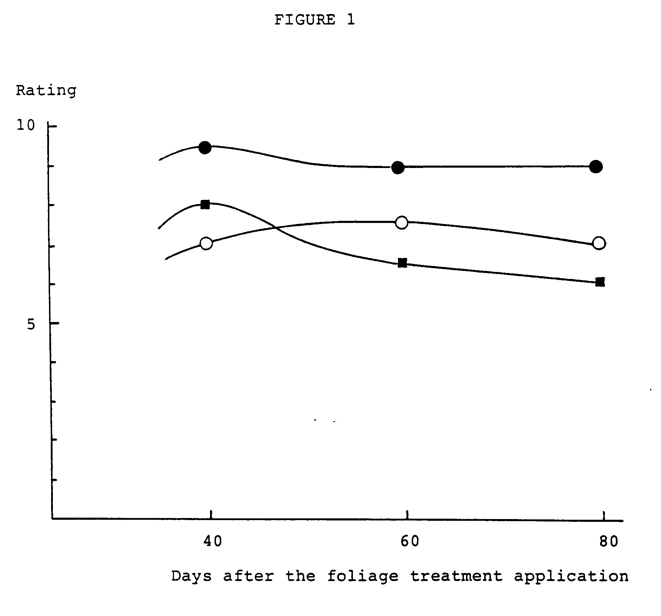

Figure 1 is a graph showing the results of the herbicidal effect in Test Example 3.

### DETAILED DESCRIPTION OF THE INVENTION

Examples of salts of Compound A that can be used as one of the active ingredients in the herbicidal composition of the present invention include alkali metal salts such as sodium and potassium salts; alkaline earth metal salts such as magnesium and calcium salts; amine salts such as monomethylamine, monoisopropylamine, dimethylamine, diisopropylamine and triethylamine salts; and salts of quaternary ammonium bases such as trimethylethylammonium cation and tetramethylammonium cation.

The amount of the Compound B relative to the amount of Compound A or its salt to be mixed therewith, is in the range from 1.5 to 400 parts by weight per part by weight of Compound A or its salt. The amount of the Compound B is preferably from 2 to 100 parts by weight, and more preferably from 2.5 to 70 parts by weight, per part by weight of Compound A or its salt.

The amount of application of the herbicidal composition of the present invention cannot be unequivocally defined because it varies depending on the mixing ratio of the active ingredients, the type of formulation, the kind of object weed, the weather condition, etc. However, it is usually employed such that from 0.01 to 5 g, preferably from 0.1 to 5 g, and more preferably from 0.2 to 3 g, per are (are (a) = 100 m²), of Compound A or its salt is used in combination with from 0.1 to 40 g, preferably from 1 to 40 g, and more preferably from 2 to 20 g, per are, of the Compound B with a total amount of the active ingredients being from 0.11 to 45 g, preferably from 1 to 45 g, and more preferably from 2 to 23 g, per are. Where the herbicidal composition of the present invention is applied after being diluted with water, an adjuvant(s) such as a spreader may be additionally used, if desired.

The herbicidal composition of the present invention is extremely high in usefulness so that it completely exterminates a wide variety of weeds ranging from annual weeds to perennial weeds even when used in small amounts of the active ingredients. Also, when applied at the time of either pre-emergence or post-emergence of weeds, it is effective so that it can exhibit a high level of herbicidal effect when used according to either soil treatment application or foliage treatment application. Therefore, the herbicidal composition of the present invention is useful for control of weeds not only in the agricultural and horticultural fields involving upland fields, orchards, etc., but also in non-crop lands including playgrounds, vacant lots, forests, and tank yards (areas of storage tanks).

The herbicidal composition of the present invention is prepared by blending various adjuvants with Compound A or its salt and the Compound B into a formulation such as a wettable powder, a suspension concentrate, a water-dispersible granule, a granule, a dust, a water-soluble granule, a water-soluble powder, or a soluble concentrate according to any customary method of preparing agricultural chemicals. Compound A or its salt and the Compound B may be either mixed together and prepared into a formulation, or prepared into separate formulations and mixed together.

The above-mentioned formulations of the herbicidal composition of the present invention may contain from 1 to 98%, preferably from 1 to 95%, and more preferably from 1 to 90%, in terms of weight ratio, of the active ingredients.

Examples of the above-mentioned adjuvants include solid carriers such as diatomaceous earth, slaked lime, calcium carbonate, talc, white carbon, kaolin, bentonite, zieclite, water-soluble starch, sodium carbonate, sodium bicarbonate, and sodium sulfate; antifreezing agents such as ethylene glycol and propylene glycol; spreaders and surfactants such as salts of alkyl sulfates, salts of alkylbenzenesulfonates, salts of lignosulfonate, polyoxyethylene glycol alkyl ethers, polyoxyethylene lauryl ethers, polyoxyethylene alkylaryl ethers, polyoxyethylene fatty acid esters, polyoxyethylene sorbitan fatty acid esters, polyoxyethylene styrylphenyl ethers, salts of polycarboxylates, salts of dialkyl sulfosuccinates, salts of alkyl diglycol ether sulfates, salts of polyoxyethylene alkylaryl ether sulfates, salts of polyoxyethylene alkylaryl phosphates, polyoxyethylene hydrogenated castor oil, salts of styrylphenyl phosphate, and condensates of salts of napthalene-sulfonate and formalin; crop oils and mineral oils such as olive oil, kapok oil, castor oil, papaya oil, camellia oil, coconut oil, sesame oil, corn oil, rice bran oil, peanut oil, cotton seed oil, soybean oil, rape seed oil, linseed oil, tung oil, and liquid paraffin; solvents such as propylene glycol monomethyl ether; thixotropic materials such as aluminum magnesium silicate and bentonite-alkylamino complexes; and thickeners such as xanthan gum. The above-mentioned adjuvants may be used in a preliminarily mixed form thereof, if desired. The herbicidal composition of the present invention, prepared in the foregoing manner, may further comprise other herbicides, insecticides, fungicides, and/or plant growth regulators incorporated thereinto.

A description will now be made of Formulation Examples of the herbicidal composition of the present invention, which are, however, not restrictive.

### Formulation Example 1

| | | |
|---|---|---|
| (1) | Trimethylsulfonium salt of Compound B | 30 parts by weight |
| (2) | Compound A | 2 parts by weight |
| (3) | Soybean oil | 54 parts by weight |
| (4) | Bentonite-alkylamino complex (New D Orben®: manufactured by Shiraishi Kogyo Kaisha, Ltd.) | 2 parts by weight |
| (5) | Mixture of a polyoxyethylene alkylaryl ether, a polyoxyethylene hydrogenated castor oil, a polyoxyethylene alkylaryl phosphate, a sodium dialkyl sulfosuccinate and a polyoxyethylene fatty acid ester (Sorpol 3747K®: manufactured by Toho Chemical Industry Co., Ltd.) | 12 parts by weight |

The above-mentioned components are uniformly mixed together by a wet pulverizer to obtain an oil-based suspension concentrate.

### Formulation Example 2

| | | |
|---|---|---|
| (1) | Isopropylamine salt of Compound B (common name: glyphosate-isopropylammonium) | 80 parts by weight |
| (2) | Compound A | 5 parts by weight |
| (3) | Surfactant of special polycarboxylic acid type polymer (Demol EP®: manufactured by Kao Corporation) | 8 parts by weight |
| (4) | Sodium sulfate | 7 parts by weight |

The above-mentioned components are dissolved or suspended in a three-fold amount of water and dried by a spray dryer to obtain a water-dispersible granule.

### Formulation Example 3

| | | |
|---|---|---|
| (1) | Trimethylsulfonium salt of Compound B | 40 parts by weight |
| (2) | Sodium salt of Compound A | 2 parts by weight |
| (3) | Water-soluble starch | 53 parts by weight |
| (4) | Sodium lignosulfonate | 5 parts by weight |

The above-mentioned components are mixed together to obtain a water-soluble powder.

### Formulation Example 4

| | | |
|---|---|---|
| (1) | Isopropylamine salt of Compound B (commone name: glyphosate-isopropylammonium) | 2 parts by weight |
| (2) | Compound A | 0.2 parts by weight |
| (3) | Calcium carbonate (fine granules) | 92.8 parts by weight |
| (4) | Sodium dialkyl sulfosuccinate (Neocol YSK®: manufactured by Dai-ichi Kogyo Seiyaku Co., Ltd.) | 1 part by weight |
| (5) | Polyoxyethylene octylphenyl ether (Noigen EA-92®: manufactured by Dai-ichi Kogyo Seiyaku Co., Ltd.) | 2 parts by weight |
| (6) | White carbon | 2 parts by weight |

The above-mentioned components are mixed together to obtain a granule.

### Formulation Example 5

| | | |
|---|---|---|
| (1) | Trimethylsulfonium salt of Compound B | 89 parts by weight |
| (2) | Compound A | 6 parts by weight |
| (3) | Condensate of sodium naphthalene-sulfonate and formalin (Lavelin FAN®:) | 5 parts by weight |

The above-mentioned components are mixed together to obtain a wettable powder.

### Formulation Example 6

| | | |
|---|---|---|
| (1) | Isopropylamine salt of Compound B (commone name: glyphosate-isopropylammonium) | 82.5 parts by weight |
| (2) | Compound A | 5.5 parts by weight |
| (3) | Sodium bicarbonate | 7 parts by weight |
| (4) | Sodium alkyl sulfate (Monogen Y-500®:) | 5 parts by weight |

The above-mentioned components are mixed together to obtain a water-soluble powder.

### Formulation Example 7

| | | |
|---|---|---|
| (1) | Trimethylsulfonium salt of Compound B | 60 parts by weight |
| (2) | Compound A | 4 parts by weight |
| (3) | Sodium alkyl sulfate (Monogen Y-500®) | 15 parts by weight |
| (4) | Calcium lignosulfonate | 10 parts by weight |
| (5) | Sodium sulfate | 11 parts by weight |

The above-mentioned components are mixed together to obtain a wettable powder.

The herbicidal effect of the herbicidal composition of the present invention will now be demonstrated in the following Test Examples.

### Test Example 1 (Foliage Treatment Test)

Upland soil was placed in 1/10,000-are (are (a) = 100 m²) pots and sown with Digitaria sanguinalis. When the plants reached the six-leaf stage, a predetermined amount of each herbicidal composition which had been diluted with 10 ℓ, per are, of water and further admixed with 0.2 % (v/v) of a spreader (Shin Rino®: manufactured by Nihon Nohyaku Co., Ltd.) was foliarly applied on the plants using a small spray gun. 27 days after the foliage treatment application, the herbicidal effect of the herbicidal composition was examined through visual observation according to the following evaluation criteria. The results are listed in Table 1.

| Rating | Growth Inhibition Rate (%) |
|---|---|
| 1 | 0 to 19 |
| 2 | 20 to 29 |
| 3 | 30 to 39 |
| 4 | 40 to 49 |
| 5 | 50 to 59 |
| 6 | 60 to 69 |
| 7 | 70 to 79 |
| 8 | 80 to 89 |
| 9 | 90 to 99 |
| 10 | 100 |

**Table 1**

| | Amount of Application of Active Ingredients (g/a) | Rating |
|---|---|---|
| Compound A | 1 | 3 |
| | 0.5 | 3 |
| | 0.25 | 2 |
| Isopropylamine salt of Compound B (common name: glyphosate-isopropylammonium) | 5 | 6 |
| | 2.5 | 4 |
| Compound A + Isopropylamine salt of Compound B (common name: glyphosate-isopropylammonium) | 1 + 5 | 8-9 |
| | 1 + 2.5 | 7 |
| | 0.5 + 5 | 8-9 |
| | 0.5 + 2.5 | 6 |
| | 0.25 + 5 | 8-9 |
| | 0.25 + 2.5 | 6 |

### Test Example 2 (Foliage Treatment Test)

In a field where weeds such as Lolium multiflorum and Agropyron smithii had been growing mixedly, foliage treatment application of a predetermined amount of each herbicidal composition which had been diluted with 15 ℓ, per are, of water and further admixed with 0.05 % (v/v) of a spreader (Shin Rino®) was done using a small spray gun when the average plant height of these weeds reached 20 to 40 cm. After the foliage treatment application, the herbicidal effect of the herbicidal composition was examined periodically through visual observation according to the evaluation criteria shown in Test Example 1. The results are shown in Figure 1. In Figure 1, the o―o curve means the case of Compound A (amount: 0.75 g/a); the ■―■ curve means the case of isopropylamine salt of Compound B (common name: glyphosate-isopropylammonium) (amount: 20 g/a); and the ●―● curve means the case of a mixture of Compound A (amount: 0.75 g/a) and isopropylamine salt of Compound B (amount: 10 g/a), respectively.

## Claims

1. A herbicidal composition comprising as active ingredients 1-(4,6-dimethoxypyrimidin-2-yl)-3-(3-trifluoromethyl-2-pyridylsulfonyl)urea and an isopropylamine salt or trimethylsulfonium salt of N-(phosphonomethyl)glycine in a weight ratio of from 1:1.5 to 1:400.

2. The herbicidal composition according to Claim 1, wherein the weight ratio of 1-(4,6-dimethoxypyrimidin-2-yl)-3-(3-trifluoromethyl-2-pyridylsulfonyl)urea and the isopropylamine salt or trimethylsulfonium salt of N-(phosphonomethyl)glycine is in the range of from 1:2 to 1:100.

3. The herbicidal composition according to Claim 2, wherein the weight ratio of 1-(4,6-dimethoxypyrimidin-2-yl)-3-(3-trifluoromethyl-2-pyridylsulfonyl)urea and the isopropylamine salt or trimethylsulfonium salt of N-(phosphonomethyl)glycine is in a range of from 1:2.5 to 1:70.

4. The herbicidal composition according to Claim 1, wherein said herbicidal composition is adapted to apply from 0.01 to 5 g, per are, of 1-(4,6-dimethoxypyrimidin-2-yl)-3-(3-trifluoromethyl-2-pyridylsulfonyl)urea in combination with from 0.1 to 40 g, per are, of the isopropylamine salt or trimethylsulfonium salt of N-(phosphonomethyl)glycine, with the total amount of the two active ingredients being from 0.11 to 45 g per are.

5. The herbicidal composition according to Claim 4, wherein said herbicidal composition is adapted to apply from 0.1 to 5 g, per are, of 1-(4,6-dimethoxypyrimidin-2-yl)-3-(3-trifluoromethyl-2-pyridylsulfonyl)urea in combination with from 1 to 40 g, per are, of the isopropylamine salt or trimethylsulfonium salt of N-(phosphonomethyl)glycine, with the total amount of the two active ingredients being from 1 to 45 g per are.

6. The herbicidal composition according to Claim 5, wherein said herbicidal composition is adapted to apply from 0.2 to 3 g, per are, of 1-(4,6-dimethoxypyrimidin-2-yl)-3-(3-trifluoromethyl-2-pyridylsulfonyl)urea in combination with from 2 to 20 g, per are, of the isopropylamine salt or trimethylsulfonium salt of N-(phosphonomethyl)glycine, with the total amount of the two active ingredients being from 2 to 23 g per are.

7. The use of a herbicidal composition according to any of the Claims 1 to 6, to be applied to an area where at least one of *Digitaria sanguinalis*, *Lolium multiflorum and Agropyron smithii* grows.

## Patentansprüche

1. Herbizide Zusammensetzung, umfassend als aktive Komponenten 1-(4,6-Dimethoxypyrimidin-2-yl)-3-(3-trifluormethyl-2-pyridylsulfony)harnstoff und ein Isopropylaminsalz oder Trimethylsulfoniumsalz von N-(Phosphonomethyl)glycin in einem Gewichtsverhältnis von 1:1,5 bis 1:400.

2. Die herbizide Zusammensetzung gemäß Anspruch 1, in der das Gewichtsverhältnis von 1-(4,6-Dimethoxypyrimidin-2-yl)-3-(3-trifluormethyl-2-pyridylsulfony)harnstoff zu dem Isopropylaminsalz oder dem Trimethylsulfoniumsalz von N-(Phosphonomethyl)glycin im Bereich von 1:2 bis 1:100 ist.

3. Die herbizide Zusammensetzung gemäß Anspruch 2, in der das Gewichtsverhältnis von 1-(4,6-Dimethoxypyrimidin-2-yl)-3-(3-trifluormethyl-2-pyridylsulfony)harnstoff zu dem Isopropylaminsalz oder dem Trimethylsulfoniumsalz von N-(Phosphonomethyl)glycin im Bereich von 1:2,5 bis 1:70 ist.

4. Die herbizide Zusammensetzung gemäß Anspruch 1, in der die herbizide Zusammensetzung abgestimmt ist um von 0,01 bis 5 g pro Ar von 1-(4,6-Dimethoxypyrimidin-2-yl)-3-(3-trifluormethyl-2-pyridylsulfony)harnstoff in Kombination mit von 0,1 bis 40 g pro Ar des Isopropylaminsalzes oder des Trimethylsulfoniumsalzes von N-(Phosphonomethyl)glycin aufzubringen, wobei die Gesamtmenge der beiden aktiven Komponenten von 0,11 bis 0,45 g pro Ar beträgt.

5. Herbizide Zusammensetzung gemäß Anspruch 4, in der die herbizide Zusammensetzung eingestellt ist um von 0,1 bis 5 g pro Ar von 1-(4,6-Dimethoxypyrimidin-2-yl)-3-(3-trifluormethyl-2-pyridylsulfony)harnstoff in Kombination mit von 1 bis 40 g pro Ar des Isopropylaminsalzes oder des Trimethylsulfoniumsalzes von N-(Phosphonomethyl)glycin aufzubringen, wobei die Gesamtmenge der beiden aktiven Komponenten von 1 bis 45 g pro Ar beträgt.

6. Herbizide Zusammensetzung gemäß Anspruch 5, wobei die herbizide Zusammensetzung so eingestellt ist um von 0,2 bis 3 g pro Ar von 1-(4,6-Dimethoxypyrimidin-2-yl)-3-(3-trifluormethyl-2-pyridylsulfony)harnstoff in Kombination mit von 2 bis 20 g pro Ar des Isopropylaminsalzes oder des Trimethylsulfoniumsalzes von N-(Phosphonomethyl)glycin aufzubringen, wobei die Gesamtmenge der beiden aktiven Komponenten von 2 bis 23 g pro Ar beträgt.

7. Verwendung einer herbiziden Zusammensetzung gemäß einem der Ansprüche 1 bis 6 zur Aufbringung auf eine Fläche, auf der wenigstens einer von Digitaria sanguinalis, Lolium multiflorum und Agropyron smithii wächst.

## Revendications

1. Composition herbicide comprenant, comme principes actifs, la 1-(4,6-diméthoxypyrimidin-2-yl)-3-(3-trifluorométhyl-2-pyridylsulfonyl)urée et un sel d'isopropylamine ou un sel de triméthylsulfonium de N-(phosphonométhyl)glycine en un rapport massique compris entre 1:1,5 et 1:400.

2. Composition herbicide selon la revendication 1, dans laquelle le rapport massique de la 1-(4,6-diméthoxypyrimidin-2-yl)-3-(3-trifluorométhyl-2-pyridylsulfonyl)urée au sel d'isopropylamine ou au sel de triméthylsulfonium de N-(phosphonométhyl)glycine est compris dans la gamme de 1:2 à 1:100.

3. Composition herbicide selon la revendication 2, dans laquelle le rapport massique de la 1-(4,6-diméthoxypyrimidin-2-yl)-3-(3-trifluorométhyl-2-pyridylsulfonyl)urée au sel d'isopropylamine ou au sel de triméthylsulfonium de N-(hosphonométhyl)glycine est compris dans la gamme de 1:2,5 à 1:70.

4. Composition herbicide selon la revendication 1, dans laquelle ladite composition herbicide est adaptée à une application de 0,01 à 5 g, par are, de la 1-(4,6-diméthoxypyrimidin-2-yl)-3-(3-trifluorométhyl-2-pyridylsulfonyl)urée en association à 0,1 à 40 g, par are, du sel d'isopropylamine ou du sel de triméthylsulfonium de N-(phosphonométhyl)glycine, la quantité totale des deux principes actifs étant comprise entre 0,11 et 45 g par are.

5. Composition herbicide selon la revendication 4, dans laquelle ladite composition herbicide est adaptée à une application de 0,1 à 5 g, par are, de la 1-(4,6-diméthoxypyrimidin-2-yl)-3-(3-trifluorométhyl-2-pyridylsulfonyl)urée en association à 1 à 40 g, par are, du sel d'isopropylamine ou du sel de triméthylsulfonium de N-(phosphonométhyl)glycine, la quantité totale des deux principes actifs étant comprise entre 1 et 45 g par are.

6. Composition herbicide selon la revendication 5, dans laquelle ladite composition herbicide est adaptée à une application de 0,2 à 3 g, par are, de la 1-(4,6-diméthoxypyrimidin-2-yl)-3-(3-trifluorométhyl-2-pyridylsulfonyl)urée en association à 2 à 20 g, par are, du sel d'isopropylamine ou du sel de triméthylsulfonium de N-(phosphonométhyl)glycine, la quantité totale des deux principes actifs étant comprise entre 2 et 23 g par are.

7. Utilisation d'une composition herbicide selon l'une quelconque des revendications 1 à 6, à appliquer à une zone où au moins un végétal parmi Digitaria sanguinalis, Lolium multiflorum et Agropyron smithii se développe.
